# EUROPÄISCHE PATENTANMELDUNG

(11) **EP 3 594 192 A1**
(43) Veröffentlichungstag der Anmeldung: **15.01.2020**
(21) Anmeldenummer: 18182494.7
(22) Anmeldetag: 09.07.2018
(51) Int. Cl.: C04B 35/05

(54) **SCHMELZMAGNESIA, EIN DIE SCHMELZMAGNESIA UMFASSENDER VERSATZ, EIN DIE SCHMELZMAGNESIA UMFASSENDES FEUERFESTES KERAMISCHES ERZEUGNIS SOWIE EIN VERFAHREN ZUR HERSTELLUNG VON SCHMELZMAGNESIA**

(71) Anmelder: Refractory Intellectual Property GmbH & Co. KG, 1100 Wien (AT)
(72) Erfinder: GELBMANN, Gerald, 8700 Leoben (AT); MAJCENOVIC, Christian, 8111 Gratwein-Straßengel (AT)
(74) Vertreter: Berkenbrink, Kai-Oliver

(57) **Zusammenfassung**

Die Erfindung betrifft eine Schmelzmagnesia, ein diese Schmelzmagnesia umfassender Versatz, ein diese Schmelzmagnesia umfassendes feuerfestes keramisches Erzeugnis sowie ein Verfahren zur Herstellung von Schmelzmagnesia.

## Beschreibung

Die Erfindung betrifft eine Schmelzmagnesia, einen diese Schmelzmagnesia umfassenden Versatz, ein diese Schmelzmagnesia umfassendes feuerfestes keramisches Erzeugnis sowie ein Verfahren zur Herstellung von Schmelzmagnesia.

Schmelzmagnesia bezeichnet einen Rohstoff auf Basis Magnesiumoxid (MgO; mineralogisch Periklas), der durch Erschmelzen von Rohstoffen auf Basis von Magnesia und das anschließende Abkühlen der Schmelze hergestellt wird. Das Erschmelzen der Rohstoffe wird üblicherweise im Elektrolichtbogenofen bei Temperaturen von über 2.840°C, der Schmelztemperatur von Magnesia, durchgeführt. Als Rohstoffe werden üblicherweise Magnesiakauster, Sintermagnesia oder Rohmagnesit erschmolzen.

Auf Grund seiner hohen Festigkeit und seines hohen Schmelzpunktes wird Schmelzmagnesia insbesondere zur Herstellung von feuerfesten Erzeugnissen verwendet, aber beispielsweise auch für elektrische und elektronische Produkte sowie in Kernreaktoren.

Während des Erschmelzens und anschließenden Abkühlens bildet das Magnesiumoxid Kristalle in der Schmelzmagnesia aus, sogenannte Periklaskristalle. Es ist bekannt, dass sich Eigenschaften der Schmelzmagnesia, insbesondere die Korrosionsbeständigkeit, mit zunehmendem mittlerem Durchmesser der Periklaskristalle verbessern (R. Amavis (Hrsg.): Refractories for the Steel Industry, Elsevier Applied Sciences (1990), 167-169; R. Sarkar: Refractory Technology: Fundamentals and Applications, CRC Press (2017), 148). Daher ist man bei der Herstellung von Schmelzmagnesia regelmäßig bestrebt, eine Schmelzmagnesia mit einem möglichst hohen mittleren Durchmesser der Periklaskristalle herzustellen.

Es ist bekannt, dass sich der mittlere Durchmesser der Periklaskristalle durch eine möglichst hohe Reinheit, also einen möglichst hohen Gehalt an Magnesiumoxid der zur Herstellung der Schmelzmagnesia verwendeten Rohstoffe steigern lässt.

Insgesamt ist man daher bestrebt, eine Schmelzmagnesia mit einem möglichst hohen Gehalt an Magnesiumoxid und einem möglichst geringen Gehalt an Nebenoxiden, also an Oxiden, die neben Magnesiumoxid in der Schmelzmagnesia vorliegen, zur Verfügung zu stellen.

Allerdings ist es technisch regelmäßig aufwendig, eine Schmelzmagnesia mit einem äußerst geringen Anteil an Nebenoxiden zur Verfügung zu stellen.

Der Erfindung liegt die Aufgabe zugrunde, eine Schmelzmagnesia mit einer hohen Korrosionsbeständigkeit zur Verfügung zu stellen.

Eine weitere Aufgabe der Erfindung besteht darin, eine Schmelzmagnesia zur Verfügung zu stellen, die trotz der Anwesenheit von Nebenoxiden, die neben Magnesiumoxid in der Schmelzmagnesia vorliegen, eine hohe Korrosionsbeständigkeit hat.

Eine weitere Aufgabe der Erfindung besteht darin, eine Schmelzmagnesia zur Verfügung zu stellen, die eine wie vorstehend ausgeführte, erhöhte Korrosionsbeständigkeit auf Grund von Periklaskristallen mit einem hohen mittleren Durchmesser aufweist.

Eine weitere Aufgabe der Erfindung besteht darin, eine Schmelzmagnesia zur Verfügung zu stellen, die bei einem gegebenen Anteil an Magnesiumoxid in der Schmelzmagnesia Periklaskristalle mit einem größeren mittleren Durchmesser aufweist als eine Schmelzmagnesia gemäß dem Stand der Technik mit dem gleichen Anteil an Magnesiumoxid.

Eine weitere Aufgabe der Erfindung besteht schließlich darin, ein Verfahren zur Herstellung einer solchen Schmelzmagnesia zur Verfügung zu stellen.

Zur Lösung der Aufgabe wird erfindungsgemäß zur Verfügung gestellt eine Schmelzmagnesia, die die folgenden Merkmale aufweist:
Die Schmelzmagnesia umfasst die folgenden Oxide in den folgenden Anteilen:
Magnesiumoxid: ≥ 95 Masse-%;
Eisenoxid: 0,4 bis 1,5 Masse-%;
ferner umfasst die Schmelzmagnesia wenigstens eines der Oxide
Titanoxid oder Boroxid in den folgenden Anteilen:
Titanoxid: 0,01 bis 1,0 Masse-%,
Boroxid: 0,025 bis 0,25 Masse-%.

Der Erfindung liegt die überraschende Erkenntnis zugrunde, dass Schmelzmagnesia mit einer hohen Korrosionsbeständigkeit zur Verfügung gestellt werden kann, wenn diese die Nebenoxide Eisenoxid, Titanoxid und Boroxid in den vorbezeichneten Massenanteilen aufweist. Dies ist wahrscheinlich auf den im Rahmen der Erfindung überraschend entdeckten Umstand zurückzuführen, dass eine Schmelzmagnesia Periklaskristalle mit einem hohen mittleren Durchmesser ausbildet, soweit die Schmelzmagnesia die vorbezeichneten Nebenoxide in den vorbezeichneten Massenanteilen aufweist. Worauf dieser Effekt beruht, konnte wissenschaftlich noch nicht abschließend geklärt werden. Jedoch hat dieser überraschende Umstand den besonderen technischen Vorteil, dass eine Schmelzmagnesia, die diese Nebenoxide in einem Anteil innerhalb der erfindungsgemäßen Bereiche umfasst, auf Grund des hohen mittleren Durchmessers der Periklaskristalle mit einer hohen Korrosionsbeständigkeit zur Verfügung gestellt werden kann und gleichzeitig mit einem geringeren technischen Aufwand als nach dem Stand der Technik herstellbar ist. Denn die Herstellung der erfindungsgemäßen Schmelzmagnesia muss nicht derart durchgeführt werden, dass diese Nebenoxide unterhalb der erfindungsgemäßen Massenanteile in der Schmelzmagnesia vorliegen.

Durch die erfindungsgemäße Schmelzmagnesia ist eine Schmelzmagnesia zur Verfügung gestellt, die bei einem gegebenen Massenanteil an Magnesiumoxid in der Schmelzmagnesia Periklaskristalle mit einem größeren mittleren Durchmesser aufweist als eine Schmelzmagnesia gemäß dem Stand der Technik mit dem gleichen Massenanteil an Magnesiumoxid.

Erfindungsgemäß wurde festgestellt, dass bei einem gegebenen Anteil an Magnesiumoxid in der Schmelzmagnesia der mittlere Durchmesser der Periklaskristalle in der Schmelzmagnesia geringer ist, wenn nicht Eisenoxid und wenigstens eines der Oxide Titanoxid und Boroxid innerhalb der erfindungsgemäßen Massenanteile in der Schmelzmagnesia vorliegen. Ferner wurde festgestellt, dass sich die Eigenschaften der Schmelzmagnesia, insbesondere deren feuerfeste Eigenschaften, verschlechtern können, wenn Eisenoxid und wenigstens eines der Oxide Titanoxid und Boroxid oberhalb der erfindungsgemäßen Anteile in der Schmelzmagnesia vorliegen.

Erfindungsgemäß wurde festgestellt, dass eine erfindungsgemäße Schmelzmagnesia mit den vorbezeichneten, vorteilhaften Eigenschaften vorliegt, soweit entweder nur Eisenoxid und Titanoxid oder nur Eisenoxid und Boroxid jeweils in einem Anteil innerhalb der erfindungsgemäßen Bereiche in der Schmelzmagnesia vorliegen. Jedoch hat sich erfindungsgemäß ebenfalls herausgestellt, dass die Schmelzmagnesia mit den vorbezeichneten, vorteilhaften Eigenschaften insbesondere auch dann zur Verfügung gestellt werden kann, wenn in der Schmelzmagnesia gleichzeitig Eisenoxid, Titanoxid und Boroxid in den erfindungsgemäßen Anteilen vorliegen. Nach einer Ausführungsform ist daher vorgesehen, dass die Schmelzmagnesia von den Oxiden Titanoxid und Boroxid nur eines dieser Oxide in den erfindungsgemäßen Anteilen aufweist. Nach einer alternativen Ausführungsform ist vorgesehen, dass die Schmelzmagnesia beide der Oxide Titanoxid und Boroxid in den erfindungsgemäßen Anteilen aufweist

Das Gefüge der erfindungsgemäßen Schmelzmagnesia ist dominiert von Periklaskristallen. Bevorzugt umfasst das Gefüge der erfindungsgemäßen Schmelzmagnesia einen Anteil an Periklaskristallen von wenigstens 95 Masse-%. Nach einer Ausführungsform weist die erfindungsgemäße Schmelzmagnesia Periklaskristalle mit einem mittleren Durchmesser von wenigstens 700 µm auf. Gemäß einer noch vorteilhafteren Ausführungsform weist die erfindungsgemäße Schmelzmagnesia Periklaskristalle mit einem mittleren Durchmesser von wenigstens 730 µm. Der mittlere Durchmesser der Periklaskristalle ist bestimmt gemäß ASTM E 112:2013.

Periklas, also Magnesiumoxid (MgO), liegt in der erfindungsgemäßen Schmelzmagnesia in einem Massenanteil von wenigstens 95 Masse-% vor. Weiter bevorzugt ist vorgesehen, dass Magnesiumoxid in der erfindungsgemäßen Schmelzmagnesia in einem Massenanteil von höchstens 99,59 Masse-% vorliegt, besonders bevorzugt mit einem Massenanteil von höchstens 99,575 Masse-%. Erfindungsgemäß wurde festgestellt, dass eine Schmelzmagnesia mit einer besonders guten Korrosionsbeständigkeit, insbesondere mit einem besonders hohen mittleren Durchmesser der Periklaskristalle zur Verfügung stellbar ist, wenn der Anteil an Magnesiumoxid in der Schmelzmagnesia zunehmend einem spezifischen Massenanteil im Bereich von 97 bis 98,5 Masse-% angenähert ist. Insoweit kann besonders bevorzugt vorgesehen sein, dass Magnesiumoxid in der Schmelzmagnesia in einem Anteil von wenigstens 96 Masse-% und noch bevorzugter in einem Anteil von wenigstens 97 Masse-% vorliegt. Ferner kann besonders bevorzugt vorgesehen sein, dass Magnesiumoxid in der Schmelzmagnesia in einem Anteil von höchstens 99 Masse-% und noch bevorzugter in einem Anteil von höchstens 98,5 Masse-% vorliegt. Insoweit kann Magnesiumoxid in der Schmelzmagnesia bevorzugt in einem Anteil im Bereich von 95 bis 99,59 Masse-%, noch bevorzugter in einem Anteil im Bereich von 96 bis 99,575 Masse-%, noch bevorzugter in einem Anteil im Bereich von 96 bis 99 Masse-% und noch bevorzugter in einem Anteil im Bereich von 97 bis 98,5 Masse-% vorliegen.

Die hierin gemachten Angaben in Masse-% in Bezug auf Anteile an Oxiden an der Schmelzmagnesia sind, soweit im Einzelfall nicht anders angegeben, jeweils bezogen auf die Gesamtmasse der Schmelzmagnesia.

Die Anteile an Oxiden in der Schmelzmagnesia, also die chemische Zusammensetzung der Schmelzmagnesia, wird mittels Röntgenfluoreszenzanalyse (RFA) bestimmt gemäß DIN EN ISO 12677:2013-02.

Die Oxide Eisenoxid, Titanoxid und Boroxid können in der erfindungsgemäßen Schmelzmagnesia grundsätzlich in einer beliebigen Oxidationsstufe vorliegen. Die hierin gemachten Angaben in Masse-% in Bezug auf Anteile an diesen Oxiden an der Schmelzmagnesia sind, unabhängig von der tatsächlichen Oxidationsstufe, bei Eisenoxid jeweils berechnet als Fe₂O₃, bei Titanoxid jeweils berechnet als TiO₂ und bei Boroxid jeweils berechnet als B₂O₃.

Erfindungsgemäß weist die Schmelzmagnesia Eisenoxid in einem Anteil im Bereich von 0,4 bis 1,5 Masse-% auf. Erfindungsgemäß wurde festgestellt, dass der mittlere Durchmesser der Periklaskristalle zunehmend gesteigert werden kann, soweit der Anteil an Eisenoxid in der Schmelzmagnesia - bei gleichzeitiger Anwesenheit von wenigstens einem der weiteren Oxide Titanoxid oder Boroxid in einem erfindungsgemäßen Anteil - einem spezifischen Anteil im Bereich von 0,5 bis 1,0 Masse-% zunehmend angenähert ist. Insoweit kann besonders bevorzugt vorgesehen sein, dass Eisenoxid in der Schmelzmagnesia in einem Anteil im Bereich von 0,5 bis 1,0 Masse-% vorgesehen ist. Insoweit kann Eisenoxid in der Schmelzmagnesia besonders bevorzugt in einem Anteil von wenigstens 0,5 vorliegen. Ferner kann Eisenoxid in der Schmelzmagnesia besonders bevorzugt in einem Anteil von höchstens 1,2 Masse-% und noch bevorzugter in einem Anteil von höchstens 1,0 Masse-% vorliegen. Besonders bevorzugt kann insoweit vorgesehen sein, dass Eisenoxid in der Schmelzmagnesia in einem Anteil im Bereich von 0,4 bis 1,0 Masse-% und noch bevorzugt in einem Anteil im Bereich von 0,5 bis 1,0 Masse-% vorliegt.

Titanoxid liegt in der erfindungsgemäßen Schmelzmagnesia in einem Anteil im Bereich von 0,01 bis 1,0 Masse-% vor. Erfindungsgemäß wurde festgestellt, dass der mittlere Durchmesser der Periklaskristalle zunehmend gesteigert werden kann, soweit der Anteil an Titanoxid in der Schmelzmagnesia einem spezifischen Anteil im Bereich von 0,1 bis 0,5 Masse-% zunehmend angenähert ist. Insoweit kann besonders bevorzugt vorgesehen sein, dass Titanoxid in der Schmelzmagnesia in einem Anteil von wenigstens 0,05 Masse-% und noch bevorzugter in einem Anteil von wenigstens 0,1 Masse-% vorliegt. Ferner kann besonders bevorzugt vorgesehen sein, dass Titanoxid in der Schmelzmagnesia in einem Anteil von höchstens 0,8 Masse-% und noch bevorzugter in einem Anteil von höchstens 0,5 Masse-% vorliegt. Besonders bevorzugt kann insoweit vorgesehen sein, dass Titanoxid in der Schmelzmagnesia in einem Anteil im Bereich von 0,05 bis 0,8 Masse-% und noch bevorzugter in einem Anteil im Bereich von 0,1 bis 0,5 Masse-% vorliegt.

Boroxid liegt in der erfindungsgemäßen Schmelzmagnesia in einem Anteil im Bereich von 0,025 bis 0,25 Masse-% vor. Erfindungsgemäß wurde festgestellt, dass der mittlere Durchmesser der Periklaskristalle zunehmend gesteigert werden kann, soweit der Anteil an Boroxid in der Schmelzmagnesia einem spezifischen Anteil im Bereich von 0,04 bis 0,1 Masse-% zunehmend angenähert ist. Insoweit kann besonders bevorzugt vorgesehen sein, dass Boroxid in der Schmelzmagnesia in einem Anteil von wenigstens 0,04 Masse-% vorliegt. Ferner kann besonders bevorzugt vorgesehen sein, dass Boroxid in der Schmelzmagnesia in einem Anteil von höchstens 0,15 Masse-% und ganz noch bevorzugter in einem Anteil von höchstens 0,1 Masse-% vorliegt. Besonders bevorzugt kann insoweit vorgesehen sein, dass Boroxid in der Schmelzmagnesia in einem Anteil im Bereich von 0,025 bis 0,15 Masse-% und noch bevorzugter in einem Anteil im Bereich von 0,04 bis 0,1 Masse-% vorliegt.

Erfindungsgemäß wurde festgestellt, dass weitere Oxide, die neben Magnesiumoxid, Eisenoxid, Titanoxid und Boroxid in der Schmelzmagnesia vorliegen, zu keiner Verringerung des mittleren Durchmessers der Periklaskristalle führen müssen, soweit die Gesamtmasse an diesen weiteren Oxiden einen Höchstanteil an der Schmelzmagnesia nicht überschreitet. Dieser Höchstanteil liegt bei etwa 3 Masse-%, so dass erfindungsgemäß bevorzugt vorgesehen sein kann, dass in der Schmelzmagnesia neben Magnesiumoxid, Eisenoxid, Titanoxid und Boroxid weitere Oxide in einer Gesamtmasse unter 3 Masse-% vorliegen noch bevorzugter in einer Gesamtmasse unter 2 Masse-%.

Entsprechend kann bevorzugt vorgesehen sein, dass Magnesiumoxid, Eisenoxid, Titanoxid und Boroxid in der Schmelzmagnesia bevorzugt in einer Gesamtmasse von wenigstens 97 Masse-% vorliegen, besonders bevorzugt in einer Gesamtmasse von wenigstens 98 Masse-%.

Erfindungsgemäß wurde festgestellt, dass weitere Oxide in Form von Calciumoxid (CaO) und Siliziumoxid (SiO₂), die regelmäßig als Nebenoxide in Schmelzmagnesia vorliegen, nicht zu einer Verringerung des mittleren Durchmessers der Periklaskristalle führen müssen, soweit diese weiteren Oxide in Anteilen, wie nachfolgend angegeben, in der Schmelzmagnesia vorliegen, so dass erfindungsgemäß vorgesehen sein kann, dass diese weiteren Oxide in Anteilen, wie nachfolgend angegeben, in der Schmelzmagnesia vorliegen, und zwar jeweils nur eines dieser Oxide oder auch beide dieser Oxide:

| | |
|---|---|
| CaO: | unter 2 Masse-% und noch bevorzugter unter 1,5 Masse-%. Bevorzugt in einem Anteil im Bereich von 0,5 bis < 2 Masse-% und noch bevorzugter in einem Anteil im Bereich von 0,5 bis < 1,5 Masse-%. |
| SiO₂: | unter 1 Masse-% und noch bevorzugter unter 0,5 Masse-%. Bevorzugt in einem Anteil im Bereich von 0,15 bis < 1 Masse-% und noch bevorzugter in einem Anteil im Bereich von 0,15 bis < 0,5 Masse-%. |

Nach einer bevorzugten Ausführungsform kann vorgesehen sein, dass Magnesiumoxid, Eisenoxid, Titanoxid, Boroxid, Calciumoxid und Siliciumoxid in der Schmelzmagnesia bevorzugt in einer Gesamtmasse von wenigstens 99 Masse-% vorliegen, besonders bevorzugt in einer Gesamtmasse von wenigstens 99,5 Masse-%.

Weitere Oxide, die neben den vorbezeichneten Oxiden Magnesiumoxid, Eisenoxid, Titanoxid, Boroxid, Calciumoxid und Siliziumoxid in der Schmelzmagnesia vorliegen, können deren Eigenschaften nachteilig beeinflussen. Insofern kann vorgesehen sein, dass solch weitere Oxide in einer Gesamtmasse unter 1 Masse-% in der Schmelzmagnesia vorliegen, besonders bevorzugt in einer Gesamtmasse unter 0,5 Masse-%. Solch weitere Oxide können insbesondere die weiteren Oxide Aluminiumoxid, Chromoxid, Natriumoxid (Na₂O), Kaliumoxid (K₂O) und Lithiumoxid (Li₂O) sein, so dass erfindungsgemäß vorgesehen sein kann, dass diese Oxide unterhalb der nachfolgenden Anteile in der Schmelzmagnesia vorliegen, und zwar jeweils nur eines dieser Oxide, mehrere dieser Oxide oder auch sämtliche dieser Oxide:

| | |
|---|---|
| Al₂O₃ : | unter 0,1 Masse-%. |
| Chromoxid (berechnet als Cr₂O₃): | unter 0,1 Masse-%. |
| Na₂O: | unter 0,1 Masse-%. |
| K₂O: | unter 0,1 Masse-%. |
| Li₂O: | unter 0,1 Masse-%. |

Freier Kohlenstoff liegt in der Schmelzmagnesia nicht oder allenfalls in Spuren vor, insbesondere in einem Anteil < 0,1 Masse-%.

Die erfindungsgemäße Schmelzmagnesia liegt bevorzugt in Form eines Kornes oder in Form von Körnern vor.

Gegenstand der Erfindung ist auch ein Rohstoff in Form der erfindungsgemäßen Schmelzmagnesia, insbesondere aus Körnern in Form der erfindungsgemäßen Schmelzmagnesia.

Gegenstand der Erfindung ist ferner ein feuerfester keramischer Versatz, also eine Mischung aus verschiedenen Rohstoffen zur Herstellung eines feuerfesten keramischen Erzeugnisses, der einen Rohstoff in Form der erfindungsgemäßen Schmelzmagnesia umfasst.

Gegenstand der Erfindung ist ferner ein feuerfestes keramisches Erzeugnis, welches die erfindungsgemäße Schmelzmagnesia umfasst.

Wie ausgeführt, liegt die erfindungsgemäße Schmelzmagnesia in Form einer erstarrten Schmelze vor. Insbesondere liegt die Schmelzmagnesia in Form einer erstarrten Magnesiaschmelze vor, also einer Schmelze auf Basis Magnesiumoxid, insbesondere einer Schmelze auf Basis wenigstens eines erschmolzenen Rohstoffs auf Basis Magnesia. Bei solch erschmolzenen Rohstoffen auf Basis Magnesia kann es sich beispielsweise um einen oder mehrere der folgenden Rohstoffe auf Basis Magnesia handeln: Magnesiakauster, Sintermagnesia, Schmelzmagnesia, Rohmagnesit oder Seewassermagnesia.

Gegenstand der Erfindung ist auch ein Verfahren zur Herstellung von Schmelzmagnesia, umfassend die folgenden Schritte:
Zur Verfügungstellung eines Versatzes, umfassend die folgenden Oxide in den folgenden Anteilen:
Magnesiumoxid: ≥ 95 Masse-%;
Eisenoxid: 0,4 bis 1,5 Masse-%;
wenigstens eines der Oxide Titanoxid oder Boroxid in den folgenden Anteilen:
Titanoxid: 0,01 bis 1,0 Masse-%,
Boroxid: 0,025 bis 0,25 Masse-%;
Erschmelzen des Versatzes;
Abkühlen der Schmelze.

Die hierin gemachten Angaben in Masse-% in Bezug auf Anteile an Oxiden in dem Versatz sind, soweit im Einzelfall nicht anders angegeben, jeweils bezogen auf die Gesamtmasse des Versatzes.

Die Anteile an Oxiden im Versatz, also die chemische Zusammensetzung des Versatzes, wird mittels Röntgenfluoreszenzanalyse (RFA) bestimmt gemäß DIN EN ISO 12677:2013-02.

Das erfindungsgemäße Verfahren dient insbesondere zur Herstellung der erfindungsgemäßen Schmelzmagnesia. Gegenstand der Erfindung ist auch eine durch das erfindungsgemäße Verfahren hergestellte Schmelzmagnesia. Diese Schmelzmagnesia weist die Merkmale der erfindungsgemäßen Schmelzmagnesia auf.

Der für die Durchführung des erfindungsgemäßen Verfahrens zur Verfügung gestellte Versatz kann die aus dem Stand der Technik bekannten Rohstoffe zur Herstellung von Schmelzmagnesia umfassen, insbesondere beispielsweise einen oder mehrere der folgenden Rohstoffe auf Basis Magnesia: Magnesiakauster, Sintermagnesia, Schmelzmagnesia, Rohmagnesit oder Seewassermagnesia.

Um einen Versatz mit den erfindungsgemäßen Anteilen an Titanoxid und Eisenoxid beziehungsweise Boroxid zur Verfügung zu stellen, können die Rohstoffe auf Basis Magnesia beispielsweise derart zusammengestellt sein, dass diese insgesamt die erfindungsgemäßen Anteile an Eisenoxid, Titanoxid und Boroxid als natürliche Verunreinigungen beziehungsweise Nebenoxide aufweisen. Alternativ oder kumulativ können dem Versatz neben den Rohstoffen auf Basis Magnesia eine oder mehrere weitere Rohstoffe zugegeben werden, um die erfindungsgemäßen Anteile an Eisenoxid, Titanoxid und Boroxid im Versatz verwirklichen zu können.

Um den gewünschten Anteil an Titanoxid im Versatz einzustellen, kann der Versatz beispielsweise als solch weiteren Rohstoff Rutilsand umfassen.

Um den gewünschten Anteil an Boroxid im Versatz einzustellen, kann der Versatz beispielsweise als solch weiteren Rohstoff Borsäure umfassen.

Der Versatz kann die Anteile an den Oxiden Magnesiumoxid, Eisenoxid, Titanoxid und Boroxid und den weiteren Oxiden Calciumoxid, Siliziumoxid, Aluminiumoxid, Chromoxid, Natriumoxid, Kaliumoxid und Lithiumoxid wie die erfindungsgemäße Schmelzmagnesia aufweisen, so dass die hierin zu den Anteilen an diesen Oxiden in der erfindungsgemäßen Schmelzmagnesia gemachten Angaben entsprechend für die Anteile an diesen Oxiden in dem für das Verfahren zur Verfügung gestellten Versatz gelten. Insoweit sind die hierin gemachten Angaben in Masse-% in Bezug auf Anteile an Oxiden an der Schmelzmagnesia, soweit im Einzelfall nicht anders angegeben, entsprechend bezogen auf die Gesamtmasse des Versatzes.

Im Übrigen kann das Verfahren zur Herstellung der erfindungsgemäßen Schmelzmagnesia gemäß den aus dem Stand der Technik bekannten Verfahren zur Herstellung von Schmelzmagnesia durchgeführt werden. Insofern kann der Versatz insbesondere in einem Elektrolichtbogenofen erschmolzen werden, insbesondere bei Temperaturen über 2.840°C, besonders bevorzugt bei Temperaturen im Bereich von 3.000 bis 3.800°C.

Anschließend kann die Schmelze bis auf Raumtemperatur abgekühlt werden, so dass eine Schmelzmagnesia, also eine erstarrte Schmelze auf Basis Magnesiumoxid beziehungsweise Magnesia vorliegt.

Die erstarrte Schmelze beziehungsweise Schmelzmagnesia kann anschließend zerkleinert werden, so dass diese in Form von Körnern vorliegt. Diese Körner können, gegebenenfalls nach einer Sortierung, als Rohstoff, insbesondere als Rohstoff zur Herstellung von feuerfesten keramischen Erzeugnissen verwendet werden.

Weitere Merkmale der Erfindung ergeben sich aus den Ansprüchen sowie dem nachfolgenden Ausführungsbeispiel.

Sämtliche Merkmale der Erfindung können, einzeln oder in Kombination, beliebig miteinander kombiniert sein.

Nachfolgend wird ein Ausführungsbeispiel der Erfindung näher beschrieben.

Das Ausführungsbeispiel betrifft eine Ausführungsform des erfindungsgemäßen Verfahrens sowie durch das Verfahren hergestellte erfindungsgemäße Schmelzmagnesia.

Für die Durchführung des erfindungsgemäßen Verfahrens wurden zunächst insgesamt vier verschiedene, erfindungsgemäße Versätze V1 bis V4 zur Verfügung gestellt. Ferner wurde zu Vergleichszwecken ein Versatz A1 gemäß dem Stand der Technik hergestellt. Die Versätze V1 bis V1 sowie A1 waren aus den Rohstoffen in den Massenanteilen gemäß der nachfolgenden Tabelle 1 zusammengesetzt:

**Tabelle 1**

| Rohstoff | V1 | V2 | V3 | V4 | A1 |
|---|---|---|---|---|---|
| Magnesiakauster | 99,90 | 99,80 | 99,80 | 99,60 | 100 |
| Borsäure | 0,10 | 0,20 | - | - | - |
| Titandioxid | - | - | 0,20 | 0,40 | - |

Die in Tabelle 1 in der ersten Spalte angegebenen Rohstoffe umfassten die Massenanteile an Oxiden gemäß der nachfolgenden Tabelle 2, jeweils bezogen auf die Gesamtmasse des betreffenden Rohstoffes:

**Tabelle 2**

| Oxid | Magnesiakauster | Borsäure (H₃BO₃) | Titandioxid |
|---|---|---|---|
| MgO | 98,10 | < 0,1 | 0,0 |
| Fe₂O₃ | 0,47 | < 0,1 | 0,0 |
| TiO₂ | < 0,1 | < 0,1 | 99,90 |
| B₂O₃ | < 0,01 | 56,20 | 0,0 |
| CaO | 0,89 | < 0,1 | 0,0 |
| SiO₂ | 0,34 | < 0,1 | < 0,05 |
| Al₂O₃ | < 0,1 | < 0,1 | < 0,05 |
| Cr₂O₃ | < 0,1 | < 0,1 | 0,0 |
| Na₂O | < 0,1 | < 0,1 | 0,0 |
| k₂O | < 0,1 | < 0,1 | 0,0 |
| Li₂O | < 0,1 | < 0,1 | 0,0 |
| Rest (inkl. Glühverlust) | 0,20 | 43,80 (Glühverlust) | < 0,1 |

Danach wiesen die Versätze V1 bis V4 und A1 die in der nachfolgenden Tabellen 3 angegebenen Massenanteilen an Oxiden auf, bezogen auf die Gesamtmasse des jeweiligen Versatzes:

**Tabelle 3**

| Oxid | V1 | V2 | V3 | V4 | A1 |
|---|---|---|---|---|---|
| MgO | 98,00 | 97,90 | 97,90 | 97,71 | 98,10 |
| Fe₂O₃ | 0,47 | 0,47 | 0,47 | 0,47 | 0,47 |
| TiO₂ | < 0,1 | < 0,1 | 0,20 | 0,40 | < 0,1 |
| B₂O₃ | 0,06 | 0,11 | < 0,01 | < 0,1 | < 0,01 |
| CaO | 0,89 | 0,89 | 0,89 | 0,89 | 0,89 |
| SiO₂ | 0,34 | 0,34 | 0,34 | 0,34 | 0,34 |
| Al₂O₃ | < 0,1 | < 0,1 | < 0,01 | < 0,01 | < 0,1 |
| Cr₂O₃ | < 0,1 | < 0,1 | < 0,01 | < 0,01 | < 0,1 |
| Na₂O | < 0,1 | < 0,1 | < 0,01 | < 0,01 | < 0,1 |
| K₂O | < 0,1 | < 0,1 | < 0,01 | < 0,01 | < 0,1 |
| Li₂O | < 0,1 | < 0,1 | < 0,01 | < 0,01 | < 0,1 |
| Rest (inkl. Glühverlust) | 0,24 | 0,29 | 0,20 | 0,20 | 0,20 |

Die Versätze V1 bis V4 sowie A1 wurden jeweils im Elektrolichtbogenofen bei 3.500°C erschmolzen und anschließend mit gleicher Abkühlrate bis auf Raumtemperatur abgekühlt.

Die aus den Versätzen V1 bis V4 erschmolzenen und abgekühlten Schmelzen lagen jeweils in Form einer erfindungsgemäßen Schmelzmagnesia vor. In der nachfolgenden Tabelle 4 ist die aus den Versätzen V1 bis V4 jeweils hergestellte Schmelzmagnesia mit S1 bis S4 bezeichnet, wobei die jeweilige Schmelzmagnesia bei den Bezeichnungen S1 bis S4 jeweils die Ziffer des Versatzes V1 bis V4 aufweist, aus dem sie erstellt wurde. Ferner ist in der nachfolgenden Tabellen 4 die aus dem Versatz A1 hergestellte Schmelzmagnesia mit B1 bezeichnet. Die Schmelzmagnesia S1 bis S4 sowie B1 wiesen jeweils die in der nachfolgenden Tabellen 4 angegebenen Massenanteile an Oxiden auf, jeweils bezogen auf die Gesamtmasse der jeweiligen Schmelzmagnesia:

**Tabelle 4**

| Oxid | S1 | S2 | S3 | S4 | B1 |
|---|---|---|---|---|---|
| MgO | 97,75 | 97,62 | 97,55 | 97,41 | 97,72 |
| Fe₂O₃ | 0,62 | 0,63 | 0,59 | 0,58 | 0,62 |
| TiO₂ | < 0,1 | < 0,1 | 0,22 | 0,43 | < 0,1 |
| B₂O₃ | 0,06 | 0,12 | < 0,01 | < 0,01 | < 0,01 |
| CaO | 1,05 | 1,07 | 1,04 | 0,99 | 1,03 |
| SiO₂ | 0,42 | 0,41 | 0,39 | 0,38 | 0,41 |
| Al₂O₃ | < 0,1 | < 0,1 | < 0,1 | < 0,1 | < 0,1 |
| Cr₂O₃ | < 0,1 | < 0,1 | < 0,1 | < 0,1 | < 0,1 |
| Na₂O | < 0,1 | < 0,1 | < 0,1 | < 0,1 | < 0,1 |
| K₂O | < 0,1 | < 0,1 | < 0,1 | < 0,1 | < 0,1 |
| Li₂O | < 0,1 | < 0,1 | < 0,1 | < 0,1 | < 0,1 |
| Rest (inkl. Glühverlust) | 0,16 | 0,27 | 0,21 | 0,21 | 0,22 |

Für die Schmelzmagnesia S1 bis S4 sowie B1 wurde der mittlere Durchmesser der Periklaskristalle gemäß ASTM E 112:2013 bestimmt. Der danach bestimmte mittlere Durchmesser der Periklaskristalle in der Schmelzmagnesia war wie in der nachfolgenden Tabelle 5 angegeben:

**Tabelle 5**

| Mittlerer Durchmesser der Periklaskristalle [µm] | Für Schmelzmagnesia |
|---|---|
| 765 | S1 |
| 749 | S2 |
| 787 | S3 |
| 831 | S4 |
| 619 | B1 |

Danach lag der mittlere Durchmesser der Periklaskristalle in der erfindungsgemäßen Schmelzmagnesia S1 bis S4 jeweils signifikant (etwa 20 bis 35 %) über dem Wert für den mittleren Durchmesser der Periklaskristalle in der Schmelzmagnesia B1 gemäß dem Stand der Technik, obgleich die Schmelzmagnesia S1 bis S4 und B1 jeweils einen praktisch identischen Anteil an Magnesiumoxid aufwiesen.

## Patentansprüche

1. Schmelzmagnesia, umfassend die folgenden Oxide in den folgenden Anteilen:
1.1 Magnesiumoxid: ≥ 95 Masse-%;
1.2 Eisenoxid: 0,4 bis 1,5 Masse-%;
1.3 wenigstens eines der Oxide Titanoxid oder Boroxid in den folgenden Anteilen:
1.3.1 Titanoxid: 0,01 bis 1,0 Masse-%,
1.3.2 Boroxid: 0,025 bis 0,25 Masse-%.

2. Schmelzmagnesia nach Anspruch 1, wobei der mittlere Durchmesser der Periklaskristalle in der Schmelzmagnesia wenigstens 700 µm beträgt.

3. Schmelzmagnesia nach wenigstens einem der vorhergehenden Ansprüche mit Eisenoxid in einem Anteil im Bereich von 0,5 bis 1,0 Masse-%.

4. Schmelzmagnesia nach wenigstens einem der vorhergehenden Ansprüche mit Titanoxid in einem Anteil im Bereich von 0,1 bis 0,5 Masse-%.

5. Schmelzmagnesia nach wenigstens einem der vorhergehenden Ansprüche mit Boroxid in einem Anteil im Bereich von 0,04 bis 0,1 Masse-%.

6. Feuerfester keramischer Versatz, umfassend einen Rohstoff in Form von Schmelzmagnesia gemäß wenigstens einem der vorhergehenden Ansprüche.

7. Feuerfestes keramisches Erzeugnis, umfassend einen Rohstoff in Form von Schmelzmagnesia gemäß wenigstens einem der Ansprüche 1 bis 5.

8. Verfahren zur Herstellung von Schmelzmagnesia, umfassend die folgenden Merkmale:
8.1 Zur Verfügungstellung eines Versatzes, umfassend die folgenden Oxide in den folgenden Anteilen:
8.1.1 Magnesiumoxid: ≥ 95 Masse-%;
8.1.2 Eisenoxid: 0,4 bis 1,5 Masse-%;
8.1.3 wenigstens eines der Oxide Titanoxid oder Boroxid in den folgenden Anteilen:
8.1.3.1 Titanoxid: 0,01 bis 1,0 Masse-%,
8.1.3.2 Boroxid: 0,025 bis 0,25 Masse-%.
8.2 Erschmelzen des Versatzes;
8.3 Abkühlen der Schmelze.

9. Verfahren nach Anspruch 8 mit einem Anteil an Eisenoxid im Versatz im Bereich von 0,5 bis 1,0 Masse-%.

10. Verfahren nach wenigstens einem der Ansprüche 8 bis 9 mit einem Anteil an Titanoxid im Versatz im Bereich von 0,1 bis 0,5 Masse-%.

11. Verfahren nach wenigstens einem der Ansprüche 8 bis 10 mit einem Anteil an Boroxid im Versatz im Bereich von 0,04 bis 0,1 Masse-%.
